# EUROPÄISCHE PATENTSCHRIFT

(11) **EP 2 159 850 B1**
(45) Veröffentlichungstag und Bekanntmachung des Hinweises auf die Patenterteilung: **07.03.2012**
(21) Anmeldenummer: 09010802.8
(22) Anmeldetag: 24.08.2009
(51) Int. Cl.: H01L 31/048

(54) **Dachstein, insbesondere Dachziegel**
Tile, in particular roofing tile
Tuile, notamment tuile de toit

(30) Priorität: 26.08.2008 DE 102008039715
(43) Veröffentlichungstag der Anmeldung: 03.03.2010
(73) Patentinhaber: Dachziegelwerke Nelskamp GmbH, 39326 Gross Ammensleben (DE)
(72) Erfinder: Bracht, Manfred, 32312 Lübbecke (DE)
(74) Vertreter: Pott, Ulrich

(56) Entgegenhaltungen:
- EP-A- 0 547 285
- WO-A-00/79604
- GB-A- 2 431 773
- JP-A- 8 144 440
- US-A1- 2007 199 590

## Beschreibung

Die Erfindung bezieht sich auf einen Dachstein , insbesondere einen Flach- oder Muldendachziegel mit einer Kopf- und einer Seitenverfalzung sowie mit einer in der Oberfläche des Dachsteins vorgesehenen, von Rändern begrenzten Ausnehmung, in die ein Solarelement einsetzbar ist, wobei das Solarelement derart in die Ausnehmung des Dachsteines einsetzbar ist, dass sie mit ihrem unteren Rand den angrenzenden Rand des Oberflächenbereiches des Dachsteines überragt und mit ihrem oberen Rand an dem oberen Rand des angrenzenden Oberflächenbereiches des Dachsteines maximal flächenbündig anliegt oder ihr obere Rand tiefer gelegen ist als der obere Rand des angrenzenden Oberflächenbereiches des Dachsteins.

Dachsteine der vorgenannten Art sind bekannt. Diese sind als Flachziegel auszubilden. Bekannt sind jedoch auch Muldenziegel mit zwei oder mehr benachbarten Muldensektionen. Bei einer Ausbildung mit mehreren Muldensektionen ist eine Dacheindeckung ermöglicht, bei welcher eine untere Dachsteinlage gegenüber einer oberen um jeweils die halbe Dachsteinbreite versetzt ist, wodurch sich ein ununterbrochener Fugenverlauf ergibt. Durch die im wesentlichen gleiche Ausbildung der einzelnen Sektionen entsteht bei einem mit diesem Dachstein eingedeckten Dach ein weitgehend gleichförmiger optischer Eindruck, weil die Versetzung der Fugen nicht in Erscheinung tritt. Solche großflächigeren Dachsteine werden in jüngerer Vergangenheit aufgrund ihrer Vorteile beim Transport und bei Eindeckarbeiten geschätzt.

Darüber hinaus ist in der jüngeren Vergangenheit insbesondere auch aufgrund stark gestiegener Energiepreise der Vorschlag umgesetzt worden, Dächer mit Solarsystemen zu versehen. Dazu ist eine Kombination aus Dachziegeln und Dachsteinen mit Photovoltaikmodulen zur Stromerzeugung vorgesehen. Solche Photovoltaikvolumenmodule sind kastenförmige Elemente, die auf das Dach aufzusetzen oder in dieses zu integrieren sind. Damit ist das Gesamterscheinungsbild des Daches jedoch wesentlich beeinträchtigt. In den Bereichen, in denen solche Photovoltaikmodule in das Dach zu integrieren sind, sind aufwändige Anbindungssysteme mit damit einhergehenden Dichtungsarbeiten vorzusehen.

Darüber hinaus ist ein Solardachziegel vorgeschlagen worden, der in herkömmlicher Bauart eine Seitenfalz und eine Kopffalz aufweist. Jeder einzelne Dachziegel nimmt ein Solarmodul auf, das auch wiederum im wesentlichen kastenförmig ausgebildet ist. Dazu sind die Dachziegel auf der Oberseite mit jeweils vier Aufnahmenuten ausgebildet. In diese Aufnahmenuten werden die Solarmodule eingeclipst mittels eines Federsystems. Der Dachziegel seinerseits hat neben der Seitenverfalzung einen ebenfalls kastenförmigen Aufnahmeraum, in die das Photovoltaikmodul mittels der vorbeschriebenen Federtechnik einzuclipsen ist. Der Aufnahmeraum ist im montierten Zustand des Moduls vollflächig ausfüllt. Diese Systeme bauen jedoch aufwändig und sind teuer. Darüber hinaus beeinträchtigen sie den optischen Gesamteindruck eines Daches nachhaltig. In Zwischenräume zwischen den kastenförmigen Photovoltaikmodulen und den angrenzenden Dachziegelbereichen sind erhebliche Verschmutzungsrisiken durch Staub, Blätter und sonstige Schadstoffe und Schmutzpartikel zu befürchten, die nur dadurch zu beseitigen sind, wenn ein Modul demontiert, danach der Dachstein gereinigt und das Modul wieder montiert wird.

Aus der WO 00/79604 A1 ist ein als Flachziegel ausgebildeter Dachstein bekannt, der eine von Dachsteinrändern begrenzte Ausnehmung aufweist, in die ein Solarkollektorelement einzusetzen ist. Dieses kann dann auch von einer transparenten Schutzfolie überdeckt werden. Die dort vorgesehenen Kollektorelemente sind allerdings nur geeignet, in Flachdachziegel eingesetzt zu werden. Werden sie in Flachdachziegel eingesetzt, besteht das hohe Risiko, dass ein Wasserlauf an den Rändern beeinträchtigt wird, was erhebliche Anwendungsprobleme mit sich bringt.

Aus der US 2007/0199590 A1 ist ein Photovoltaikmodul bekannt, das einen zumindest zweiteiligen metallischen Rahmen aufweist, in den ein Solarmodulteil einsetzbar ist. Im montierten Zustand übergreift der Rahmen das Modulteil vollständig, so dass es in dem Rahmen mit einem Abstandsmaß zur Rahmenoberseite hin eingelegt ist. Das fertig montierte Photovoltaikmodul ist in ein Dach zu integrieren, womit wiederum der optische Gesamteindruck beeinflusst ist. Zudem ist durch das eingelegte Modul der Wasserfluss auf dem Dach beeinträchtigt.

Aus der GB 24 31 773 A ist ein Muldendachziegel aus einem Glasmaterial bekannt, der von einer Solarfolie hinterklebt ist. Dieser Dachstein erfordert einen erheblichen Bauaufwand, um ihn aus dem transparenten Glasmaterial fertigen zu können. Den hohen Belastungen, die an einem Dachstein zu stellen sind, kann dieser Ziegel nur in engen Grenzen genügen.

Aus der JP 8 144440 A ist ein Dachstein der eingangs genannten Art bekannt, bei der in die Ausnehmung des Dachsteines das Solarelement eingesetzt wird. Der Dachstein ist mit zwei verschiedenen Höhenbereichen randseitig ausgebildet, so dass der obere Rand das Solarelement überragt und das Solarelement den unteren Rand des Dachsteins seinerseits überragt, was für einen Wasserabfluss günstig ist. Nachteilig bei dem vorbekannten Dachstein ist jedoch, dass er aufwändige Dichtmaßnahmen erfordert, die im rauhen Alltagsbetrieb einem erheblichen Verschleiss unterliegen. Zudem ist dieser Dachstein nur für eine Gestaltung als Flachziegel geeignet.

Es ist Aufgabe der vorliegenden Erfindung, einen Dachstein der eingangs genannten Art dahingehend weiter zu bilden, dass bei einem harmonischen Gesamterscheinungsbild eines mit solchen Dachsteinen eingedeckten Daches Photovoltaiksystem in verschleissarmer Gestaltung vorgesehen werden.

Zur Lösung dieser Aufgabe zeichnet sich der Dachstein der eingangs genannten Art dadurch aus, dass die Ausnehmung an ihrem oberen Rand im Querschnitt im wesentlichen nutenförmig ausgebildet und in den gebildeten Nutenraum das Solarelement einführbar ist, das im eingeführten Zustand von einem Schenkel des Dachsteines übergriffen ist.

Damit ist ein Dachstein geschaffen, bei dem durch den das Solarelement überlappenden Schenkel nicht der Wasserablauf sicher begünstigt ist, sondern das Solarelement in verschleißarmer Weise in den Dachziegel zu integrieren ist. Dichtungen, Klebstoffe und dgl. lassen sich verdeckt vorsehen und sind z.B. nicht mehr der direkten Sonneneinstrahlung ausgesetzt. Bevorzugtermaßen ist das Solarelement als Solarfolie ausgebildet und lässt sich deshalb hervorragend bei Muldenziegeln anwenden. Damit lässt sich ein solches Solardachstein optisch harmonisch und für viele Benutzer gar nicht wahrnehmbar in eine einzudeckende Dachfläche derart integrieren, dass die Folie nicht nur der Kontur, sondern auch der Farbe des Daches folgt, indem die Folie eine dem Dachstein entsprechende Farbgebung aufweist.

Damit ist ein Dachstein geschaffen, der den herkömmlichen Dachsteinen von seiner Formgebung her gleicht, jedoch als Photovoltaikdachstein ausgebildet sein kann, indem er mit einer seiner Kontur folgenden Solarfolie oder einem Solarkollektorelement ausgerüstet ist. Dadurch, dass - von der Oberfläche her betrachtet - die Oberfläche der Solarfolie oder des Solar-kollektors (Solarelemente) eine andere Neigung aufweist als der Dachstein selbst, also so ausgerichtet ist, dass der Wasserlauf aufgrund des Überstandsmaßes des unteren Randes des Kollektorelementes oder der Folie gegenüber der unteren angrenzenden Oberfläche des Dachsteines niemals behindert ist, auch wenn die Solarfolie oder das Solarkollektorelement nicht exakt in die Ausnehmung eingesetzt sind. Dazu kann die Ausnehmung entsprechend ausgebildet sein, also sich nach unten hinten verjüngen und mithin unten im unteren Randbereich eine kleinere Tiefe haben als in einem oberen Randbereich. Umgekehrt kann auch die Solarfolie bzw. das Solarkollektorelement aufgrund eigener geometrischer Abmessungen sicherstellen , dass es sich nach unten hin erweitert.

Mit einer Solarfolie läßt sich insbesondere dann arbeiten, wenn Muldenziegel verwendet werden. Damit lässt sich ein solcher Solardachstein optisch harmonisch und für viele Benutzer gar nicht wahrnehmbar in eine einzudeckende Dachfläche derart integrieren, dass die Folie nicht nur der Kontur, sondern auch der Farbe des Daches folgt, indem die Folie eine dem Dachstein entsprechende Farbgebung aufweist.

Die Dachsteine können mit ein, zwei oder mehr Sektionen mit jeweils einer muldenförmigen Vertiefung und einem angrenzenden erhabenen Bereich ausgebildet sein, also beispielsweise auch als großflächige Dachziegel ausgebildet werden, die mit einer Solarfolie zu versehen sind. Aber auch klassische Dachziegel wie die 15er-Formate und Hohlziegel sind für eine Ausbildung als Solardachsteine ebenso geeignet wie die Formgebungen der S-Pfannen und der Finkenberger Pfannen.

Bevorzugterweise ist die Solarfolie in einem Dachstein derart vorgesehen, dass beim eingedeckten Dach die Solarfolie eines Dachsteines zumindest annähernd bis zu der in einer Ausnehmung eines benachbart montierten Dachsteines reicht, so dass sich optisch eine Durchgängigkeit der Solarfolie darstellt. Die Solarfolien sind an eine elektrische Leitung anzuschießen. Diese kann durchgängig sein und in die Solarfolie eingelassen werden.

Bevorzugtermaßen ist die Ausnehmung jedoch so gestaltet, dass zumindest ein Rand vorgesehen ist. Bevorzugt sind zumindest ein oberer und ein unterer Rand vorgesehen und auch noch ein Seitenrand, so dass die Folie eine jeweils seitliche und eine obere und untere Begrenzung aufweist, zwischen denen die Folie derart einzukleben bzw. einzuschweißen oder einzulaminieren ist, dass ein sicherer und abgedichteter Übergang zwischen dem Dachstein als solchem und der Folie darzustellen ist. Damit ergeben sich keinerlei Risiken hinsichtlich Verschmutzung in irgendwelchen Ritzen und Fugen und ein Ablösen beispielsweise bei höheren Windgeschwindigkeiten oder bei sonstigen mechanischen Einflüssen. Die Solarfolie ist weitestgehend flächenbündig mit Seitenbereichen in die Ausnehmung einzukleben, einzulaminieren, einzuschweißen oder sonstwie in der Weise zu befestigen, dass keine emporstehenden Bereiche, die sich mechanisch lösen könnten, vorhanden sind. Auch ist es auf diese Art und Weise möglich, Fugen und Ritzen zu vermeiden. Auch Kleber können transparent oder farbig ausgebildet sein, um der farbigen Kontur des Dachsteins zu entsprechen.

Um insbesondere größere Belastungen der Folie zu vermeiden, insbesondere im Bereich einer maximalen Durchbiegung einer Solarfolie, kann auch bevorzugtermaßen vorgesehen sein, den Übergangsbereich zwischen der Mulde des Dachsteines und seinem erhabenen Längsbereich zu entschärfen und hier Bereiche zu schaffen, die derart durch Materialanhäufung emporstehen, dass dort die gegensinnige Durchbiegung der Folie abgemildert und somit kleiner gemacht ist. Dies ist visuell bei einem eingedeckten Dach kaum wahrzunehmen, da die Folie dem muldenförmigen Verlauf und dem erhabenen Längsbereich noch folgt, nur nicht so stark gegensinnig durchgebogen ist wie der Dachstein als solcher.

Hinsichtlich wesentlicher weiterer Ausgestaltungen wird auf weitere Unteransprüche, die nachfolgende Beschreibung und die Zeichnung verwiesen. In der Zeichnung zeigen:

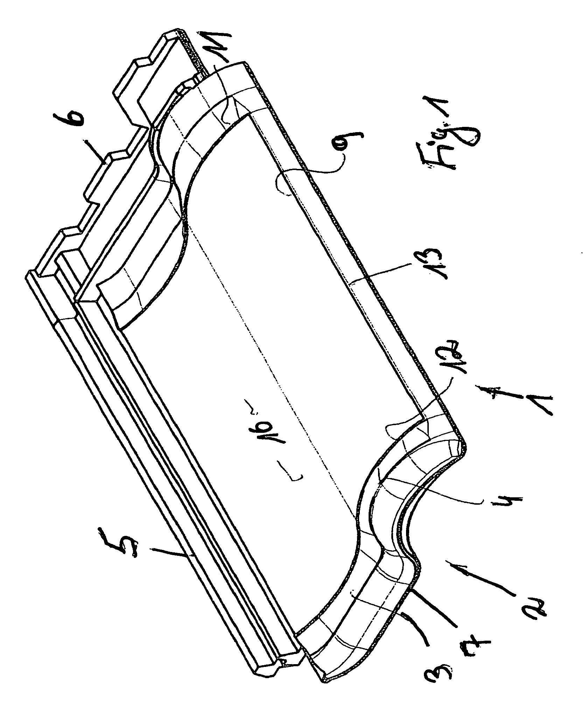

- Fig. 1: in einer perspektivischen Darstellung ein Ausführungsbeispiel eines Dachziegels nach der Erfindung;
- Fig. 2: Dachsteine nach dem Ausführungsbeispiel nach Fig. 1 im eingedeckten Zustand mit benachbarten Dachsteinen, die nicht mit einer Solarfolie versehen sind,

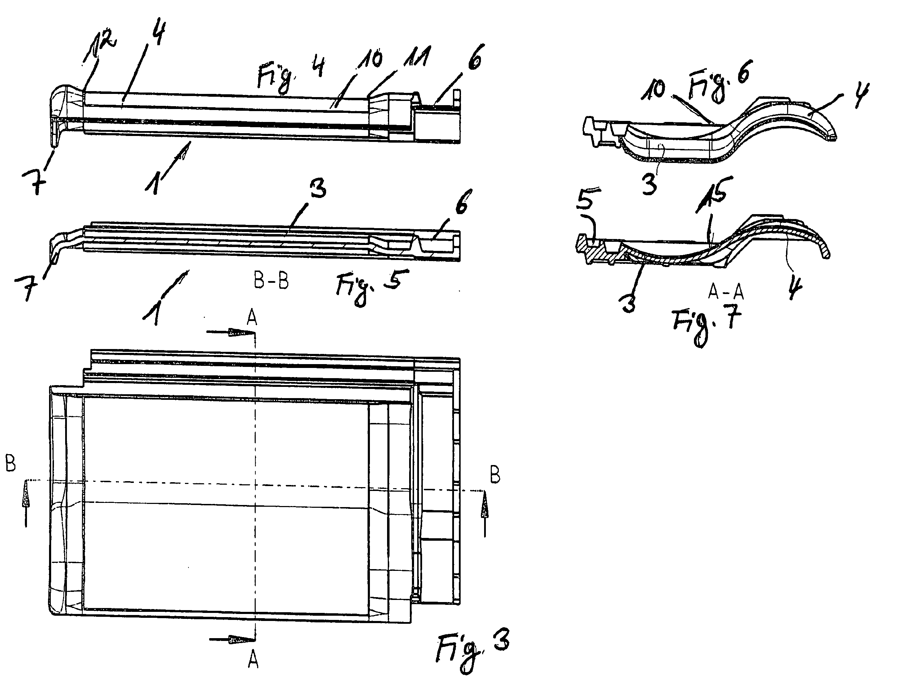

- Fig. 3: eine Draufsicht auf das Ausführungsbeispiel nach Fig. 1;
- Fig. 4: eine Seitenansicht auf das Ausführungsbeispiel nach Fig. 3,
- Fig. 5: eine Schnittdarstellung gemäß der Schnittlinie B-B in Fig. 3;
- Fig. 6: eine Ansicht von links in Fig. 3, und
- Fig. 7: eine Ansicht gemäß der Schnittlinie A-A in Fig. 3.
- Fig. 8: eine Draufsicht auf ein Ausführungsbeispiel eines Flachziegels;
- Fig. 9: eine Querschnittsdarstellung gemäß der Schnittlinie IX-IX in Fig. 8;
- Fig. 10: eine Längsschnittdarstellung gemäß der Schnittlinie X-X in Fig. 8
- Fig. 11: eine perspektivische Darstellung des Ausführungsbeispiels nach Fig. 8;
- Fig. 12: vergrößert die Einzelheitdarstellung D in Fig. 10,
- Fig. 13: vergrößert die Einzelheitdarstellung A in Fig. 10

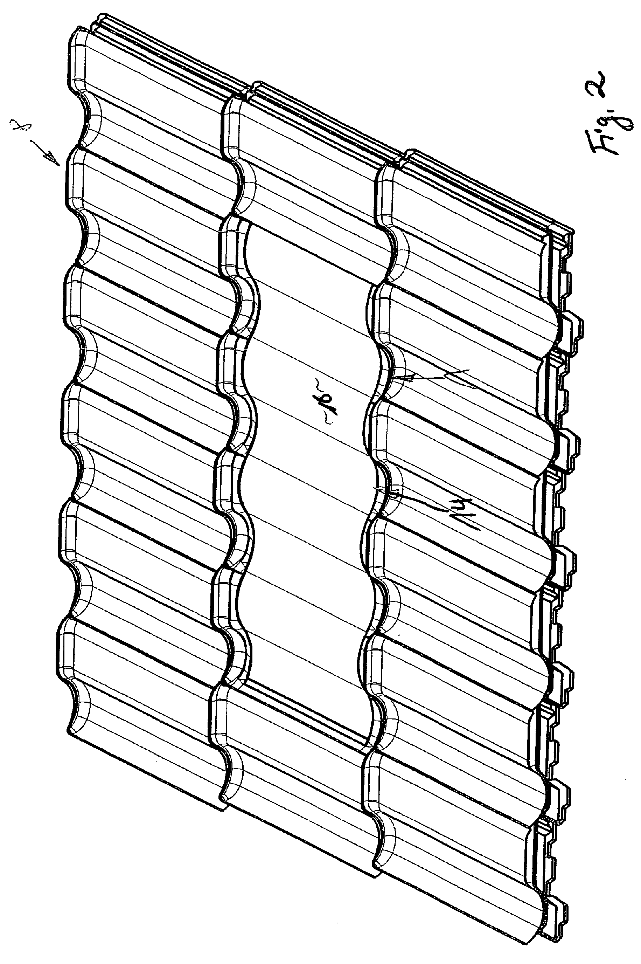

In der Zeichnung sind gleichwirkende Teile mit übereinstimmenden Bezugsziffern versehen. Allgemein mit 1 ist der als Dachziegel ausgebildete Dachstein 1 beziffert, der im gezeigten Ausführungsbeispiel eine Sektion 2 aus einer muldenförmigen Vertiefung 3 und einem benachbarten erhabenen Längsbereich 4 sowie eine Seitenverfalzung 5 und eine Kopffalz 6 aufweist. Die Seitenverfalzung 5 ist im montierten Zustand von dem erhabenen Längsbereich 4 zu übergreifen. Die Kopfverfalzung 5 ist von dem Bodenbereich 7 übergriffen und gehaltert. Dies ergibt das insgesamt harmonische Bild einer Dacheindeckung 8, wie in Fig. 2 veranschaulicht.

In dem gezeigten Ausführungsbeispiel ist der Dachstein 1 als Solardachstein ausgebildet und hat eine Ausnehmung 9, in die eine Solarfolie 10 eingeklebt ist. Diese grenzt an obere und untere Ränder 11 und 12 und ist seitlich von dem Rand 13 begrenzt. Im montierten Zustand kann in ein Dach ein Streifen aus Solardachziegeln eingebracht werden, der sich ausgesprochen harmonisch in die Gesamtdachfläche einpasst, da er jeweils muldenförmige Bereiche 3 und erhabene Längsbereiche 4 aufweist. Da es vorkommen kann, dass die Folie 10 eine maximale Durchbiegung nicht mitmachen kann, ist es möglich, im Bereich z.B. bei 15 Materialanhäufungen vorzusehen, um eine maximale Durchbiegung abzumildern.

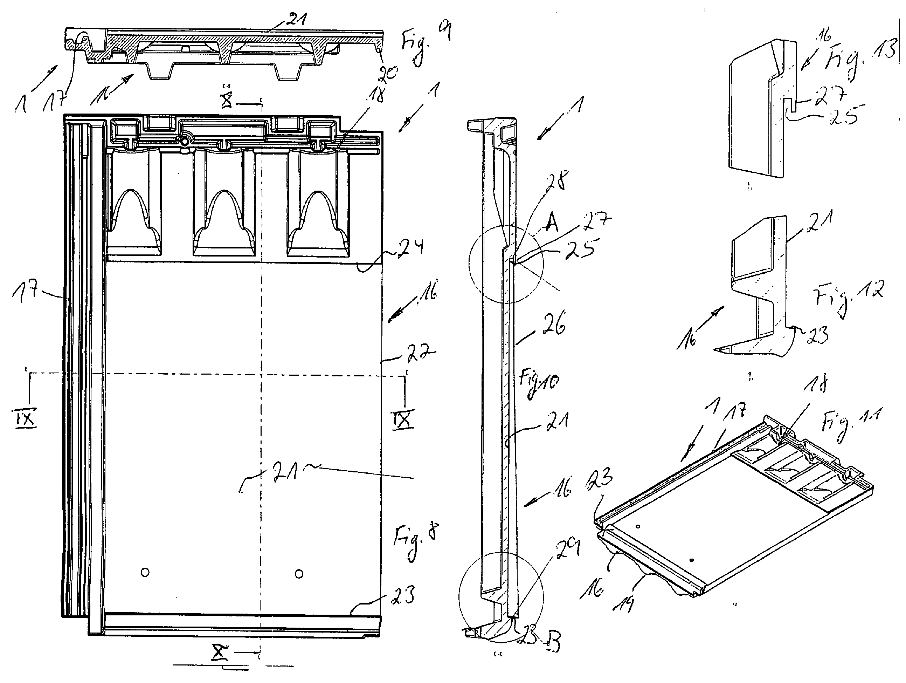

In den Ausführungsbeispielen nach den Fig. 8 bis 13 ist ein alternatives Ausführungsbeispiel eines Dachsteines 1 gezeigt, der in diesem Ausführungsbeispiel als Flachdachziegel 16 ausgebildet ist mit einer Seitenverfalzung 17 und einer Kopfverfalzung 18, wobei die Kopfverfalzung 18 die in Fig. 11 ersichtlichen Flachziegelbereiche 19 und in die Seitenverfalzung 17 der Randschenkel 20 einzulegen ist, so dass sich ein durchgehender flacher Dachsteinverbund im fertig verlegten Dach ergibt. In der Oberfläche des Flachziegels 16 ist eine allgemein mit 21 bezifferte Ausnehmung vorgesehen, die sich durchgehend bis zu dem in Fig. 8 rechten Rand 22 des Flachziegels 16 erstreckt und einen unteren Rand 23 und einen oberen Rand 24 aufweist. Wie sich näher aus den Fig. 10 und der Einzelheitdarstellung A nach Fig. 13 ergibt, hat dieser obere Rand 24 einen nutenförmigen Aufnahmeraum 25, so dass ein dort einzulegendes Solarkollektorelement 26 (Fig. 10) einzuführen ist in den nutenfömrigen Raum 25, wonach es von dem Schenkel 27 übergriffen wird.

Wie in Fig. 10 näher dargestellt, hat das dort dargestellte Solarkollektorelement 26 einen obereren Rand 28, der in den nutenförmigen Aufnahmeraum 25 eingeführt ist und einen unteren Rand 29 der breiter ausgebildet ist, als der obere Rand 28. Vom oberen Rand 28 bis zum unteren Rand 29 wird das Solarkollektorelement stetig breiter, so dass an dem unteren Rand 23 des Dachziegels übersteht, wodurch der Wasserlauf auf dem Ziegel und auf den sich darunter anschließenden Ziegel verbessert ist. Der Kollektor 26 kann sicher in die Ausnehmung 21 eingeklebt werden, so dass die absolute Dichtheit zwischen Kollektor 26 und dem Dachstein 16 gegeben ist. Wenn die Dachsteine 16 einander im Verbund übergreifen, ergibt sich mit den Kollektorflächen ein sehr harmonisches Gesamterscheinungsbild einer flachen Dacheindeckung:

## Patentansprüche

1. Dachstein (1 ), insbesondere Flach- oder Muldendachziegel mit einer Kopf- (6) und einer Seitenverfalzung (5) sowie mit einer in der Oberfläche des Dachsteines vorgesehenen, von Rändern (11, 12, 13, 23, 24) begrenzten Ausnehmung (9, 21), in die ein Solarelement (26) einsetzbar ist, wobei das Solarelement (26) derart in die Ausnehmung (9) des Dachsteines einsetzbar ist, das sie mit ihrem unteren Rand (29) den angrenzenden Rand (12, 23) des Oberflächenbereiches des Dachsteins (1) überragt und mit ihrem oberen Rand (28) an dem oberen Rand (11, 24) des angrenzenden Oberflächenbereiches des Dachsteines (1) maximal flächenbündig anliegt oder ihr oberer Rand (28) tiefer gelegen ist als der obere Rand (11, 24) des angrenzenden Oberflächenbereiches des Dachsteines, **dadurch gekennzeichnet, dass** die Ausnehmung (21) an ihrem oberen Rand im Querschnitt im wesentlichen nutenförmig ausgebildet und in den gebildeten Nutenraum (25) das Solarelement (26) einführbar ist, das im eingeführten Zustand von einem Schenkel (27) des Dachsteines (1) übergriffen ist.

2. Dachstein nach Anspruch 1, **dadurch gekennzeichnet, dass** das in der Ausnehmung (9) angeordnete Solarelement (26) von einem oberen und einem unteren Ausnehmungsrand (11, 12) begrenzt ist.

3. Dachstein nach Anspruch 1 oder 2, **dadurch gekennzeichnet, dass** die Ausnehmung (9) in einem der Seitenverfalzung (5) gegenüberliegenden Bereich einen Seitenrand (13) zur Begrenzung des Solarelements (26) aufweist.

4. Dachstein nach einem der Ansprüche 1 bis 3, **dadurch gekennzeichnet, dass** die Solarelemente (26) in die Ausnehmung (9) eingeklebt, einlaminiert oder eingeschweißt ist.

5. Dachstein nach einem der Ansprüche 1 bis 4, **dadurch gekennzeichnet, dass** das als Solarelement (26) eine Solarfolie (10) vorgesehen ist und die Solarfolie (10) eines Dachsteins (1) in einem eingedeckten Dach (8) zumindest annähernd bis zur Solarfolie (10) eines benachbart montierten Dachsteines (1) reicht.

6. Dachstein nach einem der Ansprüche 1 bis 5, **dadurch gekennzeichnet, dass** eine elektrische Vorsorgungsleitung für eine Solarfolie (10) in einem benachbarten Solardurchgangsziegel geführt ist.

7. Dachstein nach einem der Ansprüche 1 bis 6, **dadurch gekennzeichnet, dass** die Ausnehmung (9) zwecks Angleichung an eine maximale Durchbiegung einer Solarfolie (10) Konturanformungen (15) aufweist.

8. Dachstein nach Anspruch 7, **dadurch gekennzeichnet, dass** die Konturanformungen (15) durch über den Verlauf des Dachsteines (1) im Bereich seines Übergangs zwischen Mulde (3) und erhabenem Längsbereich (4) emporstehende Materialanhäufungen gebildet sind.

9. Dachstein nach enem der Ansprüche 1 bis 8, **dadurch gekennzeichnet, dass** das Solarelement (26) eine Querschnittsgestaltung hat, die sich vom oberen Rand (28) bis zum unteren Rand (29) hin erweitert.

10. Dachstein nach einem der Ansprüche 1 bis 9, **dadurch gekennzeichnet, dass** die Ausnehmung (21) eine Tiefe hat, die sich von ihrem oberen Rand bis zu ihrem unteren Rand verkleinert.

11. Dachstein nach Anspruch 10, **dadurch gekennzeichnet, dass** sich die Ausnehmung (21) bis hin zu einem Seitenrand des Dachsteines (1) erstreckt, die der Seitenverfalzung (17) gegenüberliegt.

## Claims

1. Roof tile (1), and in particular a flat or troughed roof tile, having a fold at the head (6) and a lateral fold (5) and having a recess (9, 21) provided in the surface of the roof tile which is defined by edges (11, 12, 13, 23, 24) and in which a solar module (26) can be inserted, the solar module (26) being insertable in the recess (9) in the roof tile in such a way that its bottom edge (29) projects above the adjacent edge (12, 23) of the region of the surface of the roof tile (1) and its top edge (28) rests against the top edge (11,24) of the adjacent region of the surface of the roof tile (1), flush with the surface to a maximum degree, or its top edge (28) lies at a lower level than the top edge (11, 24) of the adjacent region of the surface of the roof tile, **characterised in that**, at its top edge, the recess (21) is of a substantially groove-like form in cross-section and the solar module (26) can be inserted in the space (25) created by the groove, a fillet (27) on the roof tile (1) fitting over the solar module (26) in the inserted state.

2. Roof tile according to claim 1, **characterised in that** boundaries are defined for the solar module (26) arranged in the recess (9) by a top and a bottom edge (11, 12) of the recess.

3. Roof tile according to claim 1 or 2, **characterised in that** the recess (9) has, in a region opposite from the lateral fold (5), a lateral edge (13) to define a boundary for the solar module (26).

4. Roof tile according to one of claims 1 to 3, **characterised in that** the solar modules (26) are adhesive-bonded, laminated or welded into the recess (9).

5. Roof tile according to one of claims 1 to 4, **characterised in that** what is provided as a solar module (26) is a solar cell film (10) and, on a covered roof (8), the solar cell film (10) of a roof tile (1) reaches at least approximately to the solar cell film (10) of a roof tile (1) mounted in an adjacent position.

6. Roof tile according to one of claims 1 to 5, **characterised in that** an electrical supply line for a solar cell film (10) is run in an adjacent tile which is in a continuous solar run.

7. Roof tile according to one of claims 1 to 6, **characterised in that** the recess (9) has added shapings (15) of its contour to adapt it to give a maximum bowing of a solar cell film (10).

8. Roof tile according to claim 7, **characterised in that** the shapings (15) of the contour are formed by build-ups of material which project up beyond the surface of the roof tile (1) in the region of the transition between its trough (3) and its raised longitudinal region (4).

9. Roof tile according to one of claims 1 to 8, **characterised in that** the solar module (26) has a configuration in cross-section which becomes deeper from the top edge (28) to the bottom edge (29).

10. Roof tile according to one of claims 1 to 9, **characterised in that** the depth of the recess (21) becomes smaller from its top edge to its bottom edge.

11. Roof tile according to claim 10, **characterised in that** the recess (21) extends to a lateral edge of the roof tile (1) which is in a position opposite from the lateral fold (17).

## Revendications

1. Tuile (1), notamment tuile de toit plate ou en auge avec un recouvrement de tête (6) et un recouvrement latéral (5) ainsi qu'avec un évidement (9, 21) prévu dans la surface de la tuile, délimité par des bords (11, 12, 13, 23, 24), dans lequel un élément solaire (26) peut être inséré, sachant que l'élément solaire (26) peut être inséré dans l'évidement (9) de la tuile de telle manière qu'il dépasse avec son bord inférieur (29) du bord contigu (12, 23) de la zone de surface de la tuile (1) et son bord supérieur (28) repose à surface plane au maximum contre le bord supérieur (11, 24) de la zone de surface contiguë de la tuile (1) ou son bord supérieur (28) est placé plus bas que le bord supérieur (11, 24) de la zone de surface contiguë de la tuile, **caractérisée en ce que** la section transversale de l'évidement (21) est réalisée sur son bord supérieur sensiblement en forme de rainure et l'élément solaire (26), qui est recouvert à l'état introduit par une branche (27) de la tuile (1), peut être introduit dans l'espace de rainure formé (25).

2. Tuile selon la revendication 1, **caractérisée en ce que** l'élément solaire (26) disposé dans l'évidement (9) est délimité par un bord d'évidement supérieur et un bord d'évidement inférieur (11, 12).

3. Tuile selon la revendication 1 ou 2, **caractérisée en ce que** l'évidement (9) présente un bord latéral (13) destiné à délimiter l'élément solaire (26) dans une zone opposée au recouvrement latéral (5).

4. Tuile selon l'une quelconque des revendications 1 à 3, **caractérisée en ce que** les éléments solaires (26) sont collés, laminés ou soudés dans l'évidement (9).

5. Tuile selon l'une quelconque des revendications 1 à 4, **caractérisée en ce qu'**un film solaire (10) est prévu comme élément solaire (26) et le film solaire (10) d'une tuile (1) dans un toit couvert (8) atteint au moins approximativement le film solaire (10) d'une tuile (1) montée de manière contiguë.

6. Tuile selon l'une quelconque des revendications 1 à 5, **caractérisée en ce qu'**un câble d'alimentation électrique pour un film solaire (10) est guidé dans une tuile de passage solaire contiguë.

7. Tuile selon l'une quelconque des revendications 1 à 6, **caractérisée en ce que** l'évidement (9) présente des formations de contour (15) à des fins d'alignement sur une flexion maximale d'un film solaire (10).

8. Tuile selon la revendication 7, **caractérisée en ce que** les formations de contour (15) sont formées par des accumulations de matériau verticales au-dessus du développement de la tuile (1) dans la zone de son passage entre l'auge (3) et la zone longitudinale (4) convexe.

9. Tuile selon l'une quelconque des revendications 1 à 8, **caractérisée en ce que** l'élément solaire (26) présente une forme de section transversale qui s'élargit du bord supérieur (28) au bord inférieur (29).

10. Tuile selon l'une quelconque des revendications 1 à 9, **caractérisée en ce que** l'évidement (21) présente une profondeur qui se réduit de son bord supérieur à son bord inférieur.

11. Tuile selon la revendication 10, **caractérisée en ce que** l'évidement (21) s'étend jusqu'à un bord latéral de la tuile (1) qui fait face au recouvrement latéral (17).
